# EUROPÄISCHE PATENTSCHRIFT

(11) **EP 4 356 040 B1**
(45) Veröffentlichungstag und Bekanntmachung des Hinweises auf die Patenterteilung: **08.07.2026**
(21) Anmeldenummer: 22730556.2
(22) Anmeldetag: 30.05.2022
(51) Int. Cl.: F16P 3/14, G01V 8/20

(54) **VERFAHREN ZUM BETREIBEN EINER TECHNISCHEN ANLAGE UND TECHNISCHE ANLAGE**
METHOD FOR OPERATING A TECHNICAL INSTALLATION, AND TECHNICAL INSTALLATION
PROCÉDÉ DE COMMANDE D'UNE INSTALLATION TECHNIQUE, ET INSTALLATION TECHNIQUE

(30) Priorität: 15.06.2021 DE 102021003031
(43) Veröffentlichungstag der Anmeldung: 24.04.2024
(73) Patentinhaber: SEW-EURODRIVE GmbH & Co. KG, 76646 Bruchsal (DE)
(72) Erfinder: SCHÄFER, Thomas, 76689 Karlsdorf-Neuthard (DE); WANJEK, Andreas, 68753 Waghäusel (DE)
(86) Internationale Anmeldenummer: PCT/EP2022/064654
(87) Internationale Veröffentlichungsnummer: WO 2022/263161

(56) Entgegenhaltungen:
- DE-U1- 202018 101 285
- US-A1- 2007 205 861

## Beschreibung

Die Erfindung betrifft ein Verfahren zum Betreiben einer technischen Anlage, welche einen Außenbereich, einen Gefahrenbereich, einen Zugangsbereich, durch welchen ein Zugang von dem Außenbereich zu dem Gefahrenbereich ermöglicht ist, einen Lichtvorhang zur Überwachung des Zugangsbereichs und mindestens ein mobiles System umfasst. Die Erfindung betrifft auch eine technische Anlage, welche einen Außenbereich, einen Gefahrenbereich, einen Zugangsbereich, durch welchen ein Zugang von dem Außenbereich zu dem Gefahrenbereich ermöglicht ist, einen Lichtvorhang zur Überwachung des Zugangsbereichs und mindestens ein mobiles System umfasst.

Bei der technischen Anlage handelt es sich insbesondere um eine industrielle Anwendung, beispielsweise ein Produktionswerk, eine Industriehalle oder ein Logistikzentrum. Bei dem mobilen System der technischen Anlage handelt es sich beispielsweise um ein autonom fahrendes Fahrzeug. Das mobile System dient beispielsweise zum Transport von Gegenständen innerhalb der technischen Anlage. In der technischen Anlage befinden sich auch weitere Objekte sowie Personen.

Aus dem Dokument DE 10 2019 001 253 A1 ist ein Verfahren zum Betreiben einer technischen Anlage bekannt, welche mindestens ein mobiles System aufweist, das auf einer Verkehrsfläche der technischen Anlage verfahrbar ist. Das mobile System erfasst mit Hilfe von entsprechenden Sensoren Objekte in der technischen Anlage.

Der Gefahrenbereich ist beispielsweise ein Bereich in der technischen Anlage, in welchem gefährliche Arbeiten wie Schweißen durchgeführt werden, oder in welchem sich schnell bewegliche Roboter befinden. Bei einem unbefugten Zutritt einer Person oder eines Objekts von dem Außenbereich durch den Zugangsbereich zu dem Gefahrenbereich schaltet eine Steuereinheit beispielsweise die Maschinen in dem Gefahrenbereich ab, um Gefährdungen, Beschädigungen sowie Unfälle zu vermeiden. Durch einen solchen Stillstand der Maschinen in dem Gefahrenbereich entsteht ein Produktionsausfall. Ein solcher Stillstand ist zu vermeiden, wenn ein dafür vorgesehenes mobiles System sich in den Gefahrenbereich hinein bewegt, um beispielsweise Material in den Gefahrenbereich hinein zu transportieren oder gefertigte Produkte aus dem Gefahrenbereich hinaus zu transportieren.

Aus der DE 10 2016 107 564 A1 sind eine Sicherheitseinrichtung und ein Sicherheitsverfahren für eine Fertigungsstation von Karosseriebauteilen bekannt.

Aus der AT 522 418 A1 ist eine Fertigungsvorrichtung mit einer Fertigungszelle zum Bearbeiten von Werkstücken bekannt.

Aus der DE 20 2020 102 721 U1 ist eine Überwachungseinrichtung mit einem Sicherheitssensor, welcher zur Überwachung eines in einer Ebene verlaufenden Schutzfeldes ausgebildet ist, bekannt.

Aus der US 2007/0205861 A1 ist eine Anlage bekannt, welche einen Innenbereich und einen Außenbereich aufweist. Zwischen dem Innenbereich und dem Außenbereich ist ein Lichtvorhang zur Zutrittskontrolle vorgesehen.

Aus der DE 20 2018 101 285 U1 ist eine Überwachungseinrichtung zur Überwachung eines Durchgangs bekannt. Die Überwachungseinrichtung weist dabei ein Lichtgitter auf, welches einen Überwachungsbereich überwacht. Damit wird ein Durchgang daraufhin überwacht, ob Objekte von einem Zugangsbereich in einen Gefahrenbereich eindringen.

Der Erfindung liegt die Aufgabe zugrunde, ein Verfahren zum Betreiben einer technischen Anlage sowie eine technische Anlage weiterzubilden.

Die Aufgabe wird durch ein Verfahren zum Betreiben einer technischen Anlage mit den in Anspruch 1 angegebenen Merkmalen gelöst. Vorteilhafte Ausgestaltungen und Weiterbildungen sind Gegenstand der Unteransprüche. Die Aufgabe wird auch durch eine technische Anlage mit den in Anspruch 8 angegebenen Merkmalen gelöst. Vorteilhafte Ausgestaltungen und Weiterbildungen sind Gegenstand der Unteransprüche.

Das erfindungsgemäße Verfahren dient zum Betreiben einer technischen Anlage, welche einen Außenbereich, einen Gefahrenbereich, einen Zugangsbereich, durch welchen ein Zugang von dem Außenbereich zu dem Gefahrenbereich ermöglicht ist, einen Lichtvorhang zur Überwachung des Zugangsbereichs und mindestens ein mobiles System umfasst. Dabei wird vor einer Einfahrt des mindestens eines mobilen Systems in den Zugangsbereich von dem Lichtvorhang ein Schutzfeld in dem Zugangsbereich erzeugt und aktiviert. Bei einer Annäherung des mindestens eines mobilen Systems an den Zugangsbereich wird von einer mobilen Kommunikationseinheit des mindestens eines mobilen Systems ein Anforderungssignal zum temporären Deaktivieren des Schutzfeldes an eine stationäre Kommunikationseinheit des Lichtvorhangs gesendet. Nach Empfang des Anforderungssignals durch die stationäre Kommunikationseinheit wird von dem Lichtvorhang das Schutzfeld teilweise deaktiviert.

Das erfindungsgemäße Verfahren gestattet eine Fahrt eines dazu befugten mobilen Systems, beispielsweise zum Transport von Gegenständen, von dem Außenbereich in den Gefahrenbereich, sowie auch in die entgegengesetzte Richtung, also von dem Gefahrenbereich in den Außenbereich, durch temporäres Deaktivieren des Schutzfeldes. Dabei sendet das mobile System das Anforderungssignal unmittelbar an den Lichtvorhang. Eine Kooperation mit einer übergeordneten Leittechnik, insbesondere ein zusätzlicher Datenaustausch mit einer weiteren Steuereinheit, über ein übergeordnetes Kommunikationssystem, insbesondere einen Feldbus, ist dabei nicht erforderlich. Dadurch wird der Datenverkehr über ein übergeordnetes Kommunikationssystem der technischen Anlage vorteilhaft reduziert.

Erfindungsgemäß ist das mobile System als autonom fahrendes Fahrzeug ausgebildet, welches eine Antriebseinrichtung, einen elektrischen Energiespeicher zur Versorgung der Antriebseinrichtung sowie eine Steuereinrichtung zur Steuerung der Antriebseinrichtung aufweist. Die Antriebseinrichtung umfasst beispielsweise einen Elektromotor, ein Getriebe und Antriebsräder. Bei dem mobilen System handelt es sich insbesondere um ein fahrerloses Transportsystem zum Transport von Gegenständen innerhalb der technischen Anlage.

Gemäß einer bevorzugten Ausgestaltung der Erfindung wird nach einer Ausfahrt des mobilen Systems aus dem Zugangsbereich das Schutzfeld wieder aktiviert. Somit ist nach der Ausfahrt des mobilen Systems aus dem Zugangsbereich wieder eine reguläre Überwachung des Zugangsbereichs gewährleistet.

Gemäß einer vorteilhaften Ausgestaltung der Erfindung wird das Anforderungssignal von der mobilen Kommunikationseinheit des mindestens eines mobilen Systems mittels Lichtkommunikation an die stationäre Kommunikationseinheit des Lichtvorhangs gesendet. Die mobile Kommunikationseinheit umfasst dabei beispielsweise eine LED zum Aussenden eines Lichtstroms. Die stationäre Kommunikationseinheit umfasst dabei beispielsweise eine Fotozelle zum Empfang eines Lichtstroms.

Gemäß einer vorteilhaften Weiterbildung der Erfindung wird bei der Annäherung des mindestens eines mobilen Systems an den Zugangsbereich von der mobilen Kommunikationseinheit des mindestens eines mobilen Systems das Anforderungssignal an die stationäre Kommunikationseinheit des Lichtvorhangs gesendet, wenn sich das mindestens ein mobiles System in einem bestimmten Abstand zu dem Schutzfeld befindet. Der besagte Abstand ist verhältnismäßig klein. Das Anforderungssignal wird somit erst unmittelbar vor der Einfahrt in den Zugangsbereich gesendet.

Der besagte Abstand ist dabei vorteilhaft derart bestimmt, dass keine Person sowie kein weiteres mobiles System zwischen das sich annähernde mobile System und das Schutzfeld passt. Somit ist ausgeschlossen, dass sich bei Senden des Anforderungssignals eine Person oder ein weiteres mobiles System zwischen dem sich annähernden mobilen System und dem Schutzfeld aufhält. Auch während der Fahrt des dazu befugten mobilen Systems durch den Zugangsbereich ist also ein unbefugter Zutritt einer Person oder eines weiteren mobilen Systems erkennbar. Dadurch werden die Sicherheit und die Zuverlässigkeit der technischen Anlage vorteilhaft verbessert.

Gemäß einer vorteilhaften Ausgestaltung der Erfindung wird von einer Detektionseinheit des mindestens eines mobilen Systems durch Detektion einer Markierung, welche ortsfest in Bezug auf den Lichtvorhang angeordnet ist, erkannt, wenn sich das mindestens ein mobiles System in dem bestimmten Abstand zu dem Schutzfeld befindet. Die besagte Markierung ist dabei vorteilhaft in unmittelbarer Nähe des Schutzfeldes angebracht. Insbesondere ist die Markierung derart angebracht, dass keine Person sowie kein weiteres mobiles System zwischen die Markierung und das Schutzfeld passt. Die Markierung ist beispielsweise als Transponder, als Barcode oder als QR-Code ausgebildet und auf dem Baden angebracht. Die Detektionseinheit ist entsprechend ausgebildet, um die besagte Markierung zu detektieren.

Gemäß einer vorteilhaften Ausgestaltung der Erfindung wird nach Empfang des Anforderungssignals durch die stationäre Kommunikationseinheit von dem Lichtvorhang ein Teil des Schutzfeldes deaktiviert, welcher sich unten, also nahe des Bodens, befindet. Der verbleibende Teil des Schutzfeldes, welcher sich oben, also dem Boden abgewandt, befindet, bleibt aktiviert.

Gemäß einer vorteilhaften Ausgestaltung der Erfindung ist der besagte Teil des Schutzfeldes, der deaktiviert wird, dabei derart bemessen, dass für das mobile System inklusive seiner Zuladung eine Fahrt durch den Zugangsbereich hindurch möglich ist, ohne in den verbleibenden Teil des Schutzfeldes zu gelangen. In diesem Fall sendet die mobile Kommunikationseinheit des mobilen Systems zusammen mit dem Anforderungssignal eine Information über seine Höhe, inklusive seiner Zuladung.

Eine erfindungsgemäße technische Anlage umfasst einen Außenbereich, einen Gefahrenbereich, einen Zugangsbereich, durch welchen ein Zugang von dem Außenbereich zu dem Gefahrenbereich ermöglicht ist, einen Lichtvorhang zur Überwachung des Zugangsbereichs und mindestens ein mobiles System. Dabei ist die technische Anlage zur Ausführung des erfindungsgemäßen Verfahrens eingerichtet.

In einer erfindungsgemäßen technischen Anlage ist eine Fahrt eines dazu befugten mobilen Systems, beispielsweise zum Transport von Gegenständen, von dem Außenbereich in den Gefahrenbereich, sowie auch in die entgegengesetzte Richtung, also von dem Gefahrenbereich in den Außenbereich, durch temporäres Deaktivieren des Schutzfeldes ermöglicht. Dabei ist eine Kooperation mit einer übergeordneten Leittechnik, insbesondere ein zusätzlicher Datenaustausch mit einer weiteren Steuereinheit, über ein übergeordnetes Kommunikationssystem, insbesondere einen Feldbus, nicht erforderlich. Dadurch ist der Datenverkehr über ein übergeordnetes Kommunikationssystem der technischen Anlage vorteilhaft reduzierbar.

Erfindungsgemäß ist das mobile System als autonom fahrendes Fahrzeug ausgebildet, welches eine Antriebseinrichtung, einen elektrischen Energiespeicher zur Versorgung der Antriebseinrichtung sowie eine Steuereinrichtung zur Steuerung der Antriebseinrichtung aufweist. Die Antriebseinrichtung umfasst beispielsweise einen Elektromotor, ein Getriebe und Antriebsräder. Bei dem mobilen System handelt es sich insbesondere um ein fahrerloses Transportsystem zum Transport von Gegenständen innerhalb der technischen Anlage.

Vorzugsweise umfasst das als autonom fahrendes Fahrzeug ausgebildete mobile System ferner Mittel zur Bestimmung seiner Position innerhalb der technischen Anlage. Somit ist eine Bestimmung der Position des mobilen Systems, insbesondere relativ zu dem Lichtvorhang, ermöglicht.

Gemäß einer vorteilhaften Ausgestaltung der Erfindung weist das mindestens ein mobiles System eine mobile Kommunikationseinheit zum Senden eines Anforderungssignals mittels Lichtkommunikation auf. Die mobile Kommunikationseinheit umfasst dazu beispielsweise eine LED zum Aussenden eines Lichtstroms.

Gemäß einer vorteilhaften Ausgestaltung der Erfindung weist der Lichtvorhang eine stationäre Kommunikationseinheit zum Empfangen eines Anforderungssignals mittels Lichtkommunikation auf. Die stationäre Kommunikationseinheit umfasst dazu beispielsweise eine Fotozelle zum Empfang eines Lichtstroms.

Gemäß einer vorteilhaften Weiterbildung der Erfindung weist das mindestens ein mobiles System eine Detektionseinheit zum Detektion einer Markierung, welche ortsfest in Bezug auf den Lichtvorhang angeordnet ist, auf. Die Detektionseinheit ist dabei entsprechend ausgebildet, um eine entsprechende Markierung zu detektieren. Beispielsweise ist die Detektionseinheit zum Detektieren von Transpondern, Barcodes oder QR-Codes ausgebildet.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine schematische Darstellung einer technischen Anlage bei einer Annäherung eines mobilen Systems an einen Zugangsbereich und
- Figur 2:: eine schematische Darstellung der technischen Anlage während der Fahrt des mobilen Systems durch den Zugangsbereich.

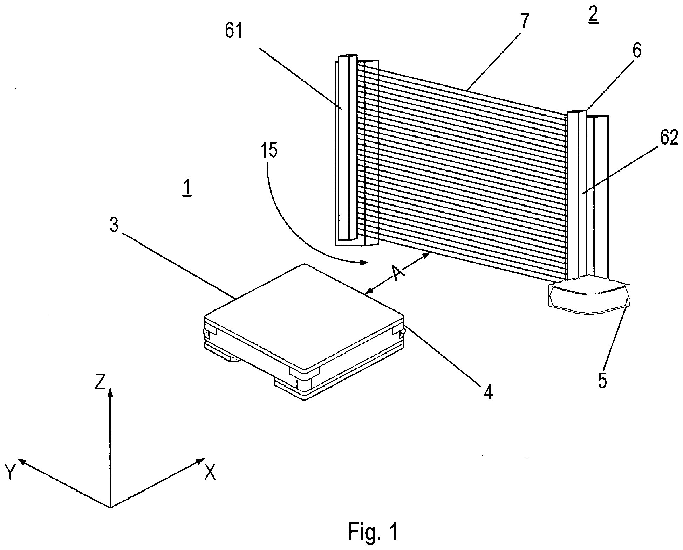

Figur 1 zeigt eine schematische Darstellung einer technischen Anlage bei einer Annäherung eines mobilen Systems 3 an einen Zugangsbereich 15. Bei der technischen Anlage handelt es sich insbesondere um eine industrielle Anwendung, beispielsweise ein Produktionswerk, eine Industriehalle oder ein Logistikzentrum. Die technische Anlage umfasst unter anderem eine Außenbereich 1 und einen Gefahrenbereich 2. Durch den Zugangsbereich 15 ist ein Zugang von dem Außenbereich 1 zu dem Gefahrenbereich 2 sowie von dem Gefahrenbereich 2 zu dem Außenbereich 1 möglich.

Der Außenbereich 1 umfasst Verkehrswege, welche von Personen und Objekten, beispielsweise Gabelstaplern oder mobilen Systemen 3, frei benutzbar sind. Der Gefahrenbereich 2 ist ein Bereich in der technischen Anlage, in welchem gefährliche Arbeiten wie beispielsweise Schweißen durchgeführt werden, oder in welchem sich schnell bewegliche Roboter oder Manipulatoren befinden.

Der Gefahrenbereich 2 ist von dem Außenbereich 1 durch einen Lichtvorhang 6 getrennt. Der Lichtvorhang 6 dient zur Überwachung des Zugangsbereichs 15. Der Lichtvorhang 6 umfasst eine erste Säule 61 und eine zweite Säule 62. Die erste Säule 61 und die zweite Säule 62 stehen in einer Querrichtung Y versetzt zueinander auf einem ebenen Boden und erstrecken sich parallel zueinander in eine Vertikalrichtung Z. Der Zugangsbereich 15 befindet sich zwischen den Säulen 61, 62.

Die Vertikalrichtung Z verläuft rechtwinklig zu der Querrichtung Y. Eine Längsrichtung X verläuft rechtwinklig zu der Vertikalrichtung Z und rechtwinklig zu der Querrichtung Y.

Die technische Anlage umfasst ferner mehrere mobile Systeme 3, welche als jeweils autonom fahrende Fahrzeuge ausgebildet sind. Die mobilen Systeme 3 dienen insbesondere dazu, Material zur Herstellung von Produkten oder gefertigte Produkte innerhalb der technischen Anlage zu transportieren. In der hier gezeigten Darstellung ist nur ein solches mobiles System 3 abgebildet. Das hier abgebildete mobile System 3 befindet sich vorliegend in dem Außenbereich 1 und bewegt sich in eine Fahrtrichtung, welche vorliegend der Längsrichtung X entspricht, auf den Zugangsbereich 15 und auf den Gefahrenbereich 2 zu.

Das mobile System 3 umfasst eine Antriebseinrichtung zum Antrieb des mobilen Systems 3, welche einen Elektromotor, ein Getriebe und Antriebsräder aufweist. Das mobile System 3 umfasst ferner einen elektrischen Energiespeicher zur Versorgung der Antriebseinrichtung mit elektrischer Energie. Das mobile System 3 umfasst auch eine Steuereinrichtung zur Steuerung der Antriebseinrichtung.

Die erste Säule 61 des Lichtvorhangs 6 umfasst eine Mehrzahl von Laserdioden, welche in der Vertikalrichtung Z versetzt zueinander angeordnet sind. Die zweite Säule 62 des Lichtvorhangs 6 umfasst eine Mehrzahl von Fotodioden, welche in der Vertikalrichtung Z versetzt zueinander angeordnet sind. Die Laserdioden senden Laserstahlen in die Querrichtung Y aus. Der Lichtvorhang 6 erzeugt mittels der Säulen 61, 62 und der Laserstrahlen ein Schutzfeld 7, durch welches der Zugangsbereich 15 überwacht wird.

Solange sich kein Objekt in dem Zugangsbereich 15 befindet treffen die Laserstrahlen auf jeweils eine Fotodiode. Bei einem unbefugten Zutritt einer Person oder eines Objekts in den Zugangsbereich 15 werden einige oder alle Laserstrahlen unterbrochen und somit werden einige oder alle Fotodioden von keinem Laserstrahl getroffen. Ein unbefugter Zutritt einer Person oder eines Objekts, insbesondere eines mobilen Systems 3, von dem Außenbereich 1 durch den Zugangsbereich 15 zu dem Gefahrenbereich 2 wird somit von dem Schutzfeld 7 erkannt.

Vor der Einfahrt des mobilen Systems 3 in den Zugangsbereich 15 ist das Schutzfeld 7 aktiviert. Wenn von dem aktivierten Schutzfeld 7 ein unbefugter Zutritt erkannt wird, so wird eine Warnmeldung generiert, und gegebenenfalls werden zusätzlich in diesem Fall die Maschinen in der Gefahrenbereich 2 abgeschaltet, um Gefährdungen, Beschädigungen sowie Unfälle zu vermeiden.

Das mobile System 3 weist vorliegend einen rechteckförmigen Querschnitt auf. In der hier gezeigten Darstellung bewegt sich das mobile System 3 in einer Fahrtrichtung, welche der Längsrichtung X entspricht, und nähert sich dem Zugangsbereich 15. Das mobile System 3 befindet sich vorliegend in einem Abstand A zu dem Schutzfeld 7. Eine dem Schutzfeld 7 zugewandte Frontseite des mobilen Systems 3 ist dabei um den Abstand A von dem Schutzfeld 7 entfernt.

Das mobile System 3 weist eine mobile Kommunikationseinheit 4 zur Kommunikation mit dem Lichtvorhang 6 auf. Die mobile Kommunikationseinheit 4 umfasst dazu beispielsweise eine LED zum Aussenden eines Lichtstroms zur Lichtkommunikation. Die mobile Kommunikationseinheit 4 ist vorliegend an der Frontseite des mobilen Systems 3 angeordnet.

Der Lichtvorhang 6 weist eine stationäre Kommunikationseinheit 5 zur Kommunikation mit dem mobilen System 3 auf. Die stationäre Kommunikationseinheit 5 umfasst dazu beispielsweise eine Fotozelle zum Empfang eines Lichtstroms zur Lichtkommunikation. Die stationäre Kommunikationseinheit 5 ist vorliegend an der zweiten Säule 62 des Lichtvorhangs 6 angeordnet.

Das mobile Systems 3 ist vorliegend zum Betreten, beziehungsweise zum Befahren, des Gefahrenbereich 2 befugt. Bei der Annäherung an den Zugangsbereich 15 wird von der mobilen Kommunikationseinheit 4 des mobilen Systems 3 mittels Lichtkommunikation ein Anforderungssignal an die stationäre Kommunikationseinheit 5 des Lichtvorhangs 6 gesendet. Das besagte Anforderungssignal wird von der stationären Kommunikationseinheit 5 des Lichtvorhangs 6 empfangen. Daraufhin wird das Schutzfeld 7 von dem Lichtvorhang 6 deaktiviert.

Ein Zutritt einer Person oder eines Objekts, insbesondere eines mobilen Systems 3, von dem Außenbereich 1 durch den Zugangsbereich 15 zu dem Gefahrenbereich 2 wird auch von dem deaktivierten Schutzfeld 7 erkannt. Von dem deaktivierten Schutzfeld 7 wird jedoch, wenn ein solcher Zutritt erkannt wird, keine Warnmeldung generiert. Es wird von einem befugten Zutritt ausgegangen.

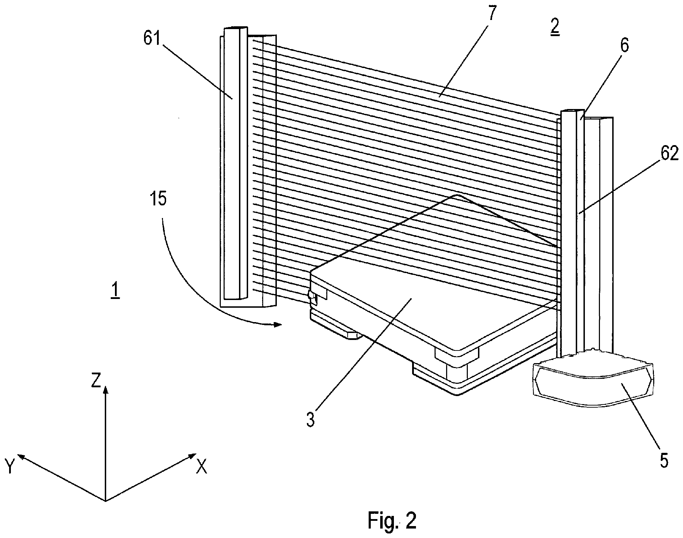

Figur 2 zeigt eine schematische Darstellung der technischen Anlage während der Fahrt des mobilen Systems 3 von dem Außenbereich 1 durch den Zugangsbereich 15 hindurch zu dem Gefahrenbereich 2. Vorliegend wird das Schutzfeld 7 von dem Lichtvorhang 6 teilweise deaktiviert. Es wird dabei ein Teil des Schutzfeldes 7 deaktiviert, welcher sich in Vertikalrichtung Z unten, also nahe des Bodens, befindet. Der verbleibende Teil des Schutzfeldes, welcher sich oben, also dem Boden abgewandt, befindet, bleibt aktiviert. Alternativ ist es denkbar, dass das Schutzfeld 7 von dem Lichtvorhang 6 vollständig deaktiviert wird.

Das mobile System 3 weist eine Höhe auf, welche einer Ausdehnung in die Vertikalrichtung Z entspricht. Der besagte Teil des Schutzfeldes 7, der deaktiviert wird, ist derart bemessen, dass für das mobile System 3, inklusive seiner Zuladung, eine Fahrt durch den Zugangsbereich 15 hindurch möglich ist, ohne in den verbleibenden Teil des Schutzfeldes 7 zu gelangen. Der besagte Teil des Schutzfeldes 7, der deaktiviert wird, weist in Vertikalrichtung Z daher eine geringfügig größere Ausdehnung als das mobile System 3 inklusive seiner Zuladung auf. Alternativ ist es, wie bereits erwähnt, denkbar, dass das Schutzfeld 7 von dem Lichtvorhang 6 vollständig deaktiviert wird, unabhängig von der Höhe des mobilen Systems 3.

Nach einer Ausfahrt des mobilen Systems 3 aus dem Zugangsbereich 15 in den Gefahrenbereich 2 hinein wird das Schutzfeld 7 wieder vollständig aktiviert. Bei einer Fahrt des mobilen Systems 3 von dem Gefahrenbereich 2 durch den Zugangsbereich 15 hindurch zu dem Außenbereich 1 wird das Schutzfeld auf gleiche Art deaktiviert. Nach einer Ausfahrt des mobilen Systems 3 aus dem Zugangsbereich 15 in den Außenbereich 1 hinein wird das Schutzfeld 7 wieder vollständig aktiviert.

### Bezugszeichenliste

- 1: Außenbereich
- 2: Gefahrenbereich
- 3: Mobiles System
- 4: mobile Kommunikationseinheit
- 5: stationäre Kommunikationseinheit
- 6: Lichtvorhang
- 7: Schutzfeld
- 15: Zugangsbereich
- 61: erste Säule
- 62: zweite Säule
- A: Abstand
- X: Längsrichtung
- Y: Querrichtung
- Z: Vertikalrichtung

## Patentansprüche

1. Verfahren zum Betreiben einer technischen Anlage, umfassend
einen Außenbereich (1), einen Gefahrenbereich (2), einen Zugangsbereich (15), durch welchen ein Zugang von dem Außenbereich (1) zu dem Gefahrenbereich (2) ermöglicht ist,
einen Lichtvorhang (6) zur Überwachung des Zugangsbereichs (15),
und mindestens ein mobiles System (3),
**dadurch gekennzeichnet, dass**
vor einer Einfahrt des mindestens einen mobilen Systems (3) in den Zugangsbereich (15) von dem Lichtvorhang (6) ein Schutzfeld (7) in dem Zugangsbereich (15) erzeugt und aktiviert wird;
bei einer Annäherung des mindestens einen mobilen Systems (3) an den Zugangsbereich (15) von einer mobilen Kommunikationseinheit (4) des mindestens einen mobilen Systems (3) ein Anforderungssignal zum temporären Deaktivieren des Schutzfeldes (7) an eine stationäre Kommunikationseinheit (5) des Lichtvorhangs (6) gesendet wird; und
nach Empfang des Anforderungssignals durch die stationäre Kommunikationseinheit (5) von dem Lichtvorhang (6) das Schutzfeld (7) teilweise deaktiviert wird, und dass
das mobile System (3) als autonom fahrendes Fahrzeug ausgebildet ist, welches eine Antriebseinrichtung, einen elektrischen Energiespeicher zur Versorgung der Antriebseinrichtung sowie eine Steuereinrichtung zur Steuerung der Antriebseinrichtung aufweist.

2. Verfahren nach einem der vorangegangenen Ansprüche, **dadurch gekennzeichnet, dass** nach einer Ausfahrt des mobilen Systems (3) aus dem Zugangsbereich (15) das Schutzfeld (7) wieder aktiviert wird.

3. Verfahren nach einem der vorangegangenen Ansprüche, **dadurch gekennzeichnet, dass** das Anforderungssignal
von der mobilen Kommunikationseinheit (4) des mindestens einen mobilen Systems (3) mittels Lichtkommunikation
an die stationäre Kommunikationseinheit (5) des Lichtvorhangs (6) gesendet wird.

4. Verfahren nach einem der vorangegangenen Ansprüche, **dadurch gekennzeichnet, dass** bei der Annäherung des mindestens einen mobilen Systems (3) an den Zugangsbereich (15) von der mobilen Kommunikationseinheit (4) des mindestens einen mobilen Systems (3) das Anforderungssignal an die stationäre Kommunikationseinheit (5) des Lichtvorhangs (6) gesendet wird,
wenn sich das mindestens eine mobile System (3) in einem bestimmten Abstand (A) zu dem Schutzfeld (7) befindet.

5. Verfahren nach Anspruch 4, **dadurch gekennzeichnet, dass**
von einer Detektionseinheit des mindestens einen mobilen Systems (3)
durch Detektion einer Markierung, welche ortsfest in Bezug auf den Lichtvorhang (6) angeordnet ist,
erkannt wird, wenn sich das mindestens eine mobile System (3) in dem bestimmten Abstand (A) zu dem Schutzfeld (7) befindet.

6. Verfahren nach einem der vorangegangenen Ansprüche, **dadurch gekennzeichnet, dass** ein Teil des Schutzfeldes (7) deaktiviert wird, welcher sich unten, also nahe des Bodens, befindet, und dass
der verbleibende Teil des Schutzfeldes (7), weicher sich oben, also dem Boden abgewandt, befindet, aktiviert bleibt.

7. Verfahren nach Anspruch 6, **dadurch gekennzeichnet, dass**
der Teil des Schutzfeldes (7), der deaktiviert wird, derart bemessen ist, dass für das mobile System (3) inklusive seiner Zuladung eine Fahrt durch den Zugangsbereich (15) hindurch möglich ist, ohne in den verbleibenden Teil des Schutzfeldes (7) zu gelangen, und dass die mobile Kommunikationseinheit (4) des mobilen Systems (3) zusammen mit dem Anforderungssignal eine Information über seine Höhe, inklusive seiner Zuladung, sendet.

8. Technische Anlage, umfassend
einen Außenbereich (1), einen Gefahrenbereich (2), einen Zugangsbereich (15), durch welchen ein Zugang von dem Außenbereich (1) zu dem Gefahrenbereich (2) ermöglicht ist,
einen Lichtvorhang (6) zur Überwachung des Zugangsbereichs (15),
und mindestens ein mobiles System (3),
**dadurch gekennzeichnet, dass**
die technische Anlage zur Ausführung des Verfahrens nach einem der vorangegangenen Ansprüche eingerichtet ist, und dass
das mobile System (3) als autonom fahrendes Fahrzeug ausgebildet ist, welches eine Antriebseinrichtung, einen elektrischen Energiespeicher zur Versorgung der Antriebseinrichtung sowie eine Steuereinrichtung zur Steuerung der Antriebseinrichtung aufweist.

9. Technische Anlage nach Anspruch 8, **dadurch gekennzeichnet, dass** das mindestens eine mobile System (3) eine mobile Kommunikationseinheit (4) zum Senden eines Anforderungssignals mittels Lichtkommunikation aufweist.

10. Technische Anlage nach einem der Ansprüche 8 bis 9, **dadurch gekennzeichnet, dass** der Lichtvorhang (6) eine stationäre Kommunikationseinheit (5) zum Empfangen eines Anforderungssignals mittels Lichtkommunikation aufweist.

11. Technische Anlage nach einem der Ansprüche 8 bis 10, **dadurch gekennzeichnet, dass** das mindestens eine mobile System (3) eine Detektionseinheit zum Detektion einer Markierung, welche ortsfest in Bezug auf den Lichtvorhang (6) angeordnet ist, aufweist.

## Claims

1. A method of operating a technical installation comprising an outer region (1), a danger region (2), an access region (15), enabling access from the outer region (1) to the danger region (2), a light curtain (6) for monitoring the access region (15), and at least one mobile system (3),
**characterised in that**
before travel of the at least one mobile system (3) into the access region (15), a protective field (7) is generated and activated in the access region (15) by the light curtain (6);
when the at least one mobile system (3) approaches the access region (15), a mobile communication unit (4) of the at least one mobile system (3) transmits a request signal for temporary deactivation of the protective field (7) to a stationary communication unit (5) of the light curtain (6); and
after receipt of the request signal by the stationary communication unit (5), the protective field (7) is partially deactivated by the light curtain (6), and **in that** the mobile system (3) is in the form of an autonomous driving vehicle which has a drive device, an electrical energy store to supply the drive device and a control device to control the drive device.

2. A method according to any one of the preceding claims, **characterised in that** the protective field (7) is activated again after travel of the mobile system (3) out of the access region (15).

3. A method according to any one of the preceding claims, **characterised in that** the request signal is transmitted to the stationary communication unit (5) of the light curtain (6) from the mobile communication unit (4) of the at least one mobile system (3) by means of light communication.

4. A method according to any one of the preceding claims, **characterised in that** when the at least one mobile system (3) approaches the access region (15), the mobile communication unit (4) of the at least one mobile system (3) transmits the request signal to the stationary communication unit (5) of the light curtain (6) when the at least one mobile system (3) is located at a specific distance (A) from the protective field (7).

5. A method according to claim 4, **characterised in that** a detection unit of the at least one mobile system (3) identifies through detection of a marking, arranged in a stationary manner with regard to the light curtain (6), when the at least one mobile system (3) is located at the specific distance (A) from the protective field (7).

6. A method according to any one of the preceding claims, **characterised in that** a part of the protective field (7), which part is located at the bottom, therefore close to the floor, is deactivated, and **in that** the remaining part of the protective field (7), which part is located at the top, therefore remote from the floor, remains activated.

7. A method according to claim 6, **characterised in that** the deactivated part of the protective field (7) is dimensioned such that travel through the access region (15) is possible for the mobile system (3), including its load, without reaching the remaining part of the protective field (7), and **in that** the mobile communication unit (4) of the mobile system (3) transmits, together with the request signal, information about its height including its load.

8. A technical installation comprising an outer region (1), a danger region (2), an access region (15), enabling access from the outer region (1) to the danger region (2), a light curtain (6) for monitoring the access region (15), and at least one mobile system (3), **characterised in that**
the technical installation is configured to carry out the method according to any one of the preceding claims, and **in that**
the mobile system (3) is in the form of an autonomous driving vehicle which has a drive device, an electrical energy store to supply the drive device and a control device to control the drive device.

9. A technical installation according to claim 8, **characterised in that** the at least one mobile system (3) has a mobile communication unit (4) to transmit a request signal by means of light communication.

10. A technical installation according to one of claims 8 to 9, **characterised in that** the light curtain (6) has a stationary communication unit (5) to receive a request signal by means of light communication.

11. A technical installation according to any one of claims 8 to 10, **characterised in that** the at least one mobile system (3) has a detection unit to detect a marking which is arranged in a stationary manner with regard to the light curtain (6).

## Revendications

1. Procédé de fonctionnement d'une installation technique, comprenant une zone extérieure (1), une zone dangereuse (2), une zone d'accès (15), à travers laquelle un accès de la zone extérieure (1) à la zone dangereuse (2) est rendu possible, un rideau lumineux (6) pour la surveillance de la zone d'accès (15), et au moins un système mobile (3), **caractérisé en ce que** avant une entrée du au moins un système mobile (3) dans la zone d'accès (15), un champ de protection (7) est généré et activé par le rideau lumineux (6) dans la zone d'accès (15) ; lors d'une approche du au moins un système mobile (3) vers la zone d'accès (15), un signal de demande pour désactiver temporairement le champ de protection (7) est envoyé par une unité de communication mobile (4) du au moins un système mobile (3) à une unité de communication stationnaire (5) du rideau lumineux (6) ; et après réception du signal de demande par l'unité de communication stationnaire (5) du rideau lumineux (6), le champ de protection (7) est partiellement désactivé, et **en ce que** le système mobile (3) est conçu comme un véhicule autonome, lequel comprend un dispositif d'entraînement, un accumulateur électrique pour l'alimentation du dispositif d'entraînement ainsi qu'un dispositif de commande pour la commande du dispositif d'entraînement.

2. Procédé selon l'une des revendications précédentes, **caractérisé en ce qu'**après une sortie du système mobile (3) de la zone d'accès (15), le champ de protection (7) est réactivé.

3. Procédé selon l'une des revendications précédentes, **caractérisé en ce que** le signal de demande est envoyé par l'unité de communication mobile (4) du au moins un système mobile (3) à l'unité de communication stationnaire (5) du rideau lumineux (6) au moyen de communication optique.

4. Procédé selon l'une des revendications précédentes, **caractérisé en ce que** lors de l'approche du au moins un système mobile (3) vers la zone d'accès (15), le signal de demande est envoyé par l'unité de communication mobile (4) du au moins un système mobile (3) à l'unité de communication stationnaire (5) du rideau lumineux (6), lorsque le au moins un système mobile (3) se trouve à une certaine distance (A) du champ de protection (7).

5. Procédé selon la revendication 4, **caractérisé en ce qu'**il est détecté par une unité de détection du au moins un système mobile (3), par détection d'un marqueur disposé de manière fixe par rapport au rideau lumineux (6), lorsque le au moins un système mobile (3) se trouve à la certaine distance (A) du champ de protection (7).

6. Procédé selon l'une des revendications précédentes, **caractérisé en ce qu'**une partie du champ de protection (7) est désactivée, laquelle se trouve en bas, c'est-à-dire près du sol, et **en ce que** la partie restante du champ de protection (7), laquelle se trouve en haut, c'est-à-dire tournée à l'opposé du sol, reste activée.

7. Procédé selon la revendication 6, **caractérisé en ce que** la partie du champ de protection (7) qui est désactivée est dimensionnée de telle sorte que pour le système mobile (3) y compris son chargement, un passage à travers la zone d'accès (15) soit possible sans atteindre la partie restante du champ de protection (7), et **en ce que** l'unité de communication mobile (4) du système mobile (3) envoie, avec le signal de demande, une information concernant sa hauteur, y compris son chargement.

8. Installation technique, comprenant une zone extérieure (1), une zone dangereuse (2), une zone d'accès (15), à travers laquelle un accès de la zone extérieure (1) à la zone dangereuse (2) est rendu possible, un rideau lumineux (6) pour la surveillance de la zone d'accès (15), et au moins un système mobile (3),
**caractérisé en ce que** l'installation technique est agencée pour l'exécution du procédé selon l'une des revendications précédentes, et **en ce que** le système mobile (3) est conçu comme un véhicule autonome, lequel comprend un dispositif d'entraînement, un accumulateur électrique pour l'alimentation du dispositif d'entraînement ainsi qu'un dispositif de commande pour la commande du dispositif d'entraînement.

9. Installation technique selon la revendication 8, **caractérisée en ce que** le au moins un système mobile (3) comprend une unité de communication mobile (4) pour envoyer un signal de demande au moyen de communication optique.

10. Installation technique selon l'une des revendications 8 à 9, **caractérisée en ce que** le rideau lumineux (6) comprend une unité de communication stationnaire (5) pour la réception d'un signal de demande au moyen de communication optique.

11. Installation technique selon l'une des revendications 8 à 10, **caractérisée en ce que** le au moins un système mobile (3) comprend une unité de détection pour la détection d'un marqueur disposé de manière fixe par rapport au rideau lumineux (6).
